# EUROPÄISCHE PATENTSCHRIFT

(11) **EP 0 831 011 B1**
(45) Veröffentlichungstag und Bekanntmachung des Hinweises auf die Patenterteilung: **18.12.2002**
(21) Anmeldenummer: 97116240.9
(22) Anmeldetag: 18.09.1997
(51) Int. Cl.: B62D 1/18

(54) **Lenksäulenbaueinheit**
Steering column assembly
Ensemble d'une colonne de direction

(30) Priorität: 18.09.1996 DE 19638051
(43) Veröffentlichungstag der Anmeldung: 25.03.1998
(73) Patentinhaber: NACAM Deutschland GmbH, 49448 Lemförde (DE)
(72) Erfinder: Baumann, Janet, 49356 Diepholz (DE); Schäfer, Burkhard, 27777 Ganderkesee (DE)

(56) Entgegenhaltungen:
- EP-A- 0 341 078
- WO-A-91/06461

## Beschreibung

Die Erfindung betrifft eine Lenksäulenbaueinheit einer verstellbaren Kraftfahrzeuglenksäule mit einer Lenkwelle, einem die Lenkwelle aufnehmenden Lenksäulengehäuse und einer Befestigungsvorrichtung für die lösbare Festlegung des Lenkwellengehäuses an einer karosseriefesten Halterung, wobei die Befestigungsvorrichtung mindestens ein am Lenksäulengehäuse festgelegtes Lamellenpaket aufweist.

Lenksäulenbaueinheiten der gattungsgemäßen Art werden sowohl in Personenwagen als auch in Lastkraftwagen eingebaut. Üblicherweise ist das Lenksäulengehäuse so aufgebaut, daß die eigentliche Lenkwelle von einem Mantelrohr umgeben ist, in dem die Lenkwelle mit Hilfe von mindestens zwei Lagerungen, beispielsweise in Form von Kugellagern oder Gleitlagern, drehbar aufgenommen ist. Zur Festlegung des Mantelrohres an einer karosserieseitigen Halterung ist dieses üblicherweise mit Blechprofilen versehen, die beispielsweise an der Außenseite des Mantelrohres angeschweißt sind. Bei den heute verwendeten Lenksäulenbaueinheiten, die eine Einstellung der Lenksäule in der Länge, in der Neigung und in der Höhe an die Bedürfnisse des Kraftfahrzeugbenutzers ermöglichen, befinden sich an der Außenseite der Blechprofile sogenannte Lamellenpakete, die aus durch Distanzscheiben verbundenen Blechstreifen bestehen. Die Lamellenpakete an der Außenseite des Lenksäulengehäuses wirken mit korrespondierenden Lamellenpaketen an der karosserieseitigen Halterung zusammen und werden durch geeignete Befestigungsvorrichtungen zur Arretierung der Lenksäule in einer bestimmten vorgewählten Position zusammengepreßt.

Eine derartige Sicherheitslenkvorrichtung ist beispielsweise aus der DE-AS 17 80 061 bekannt. Hierin ist eine in der Höhe und in der Länge verstellbare Lenksäule über Lamellenpakete lösbar in der eingestellten Position festgelegt. Die Lenkwelle ist über Kugellager drehbar, jedoch axial unverschiebbar in einem Mantelrohr gelagert. Ein Klemmbolzen durchsetzt axial beweglich die ineinander greifenden Lamellenpakete und bildet somit zusammen mit einer Feder und einem Bedienhebel eine Hubmechanik, durch die die Lamellenpakete geklemmt beziehungsweise gelöst werden und die in der Klemmposidon das Mantelrohr der Lenksäule festlegt.

Der übliche Aufbau des Lenksäulengehäuses mit Mantelrohr und daran angeschweißten Halterungen hat sich zwar in der Praxis durchaus als sinnvoll erwiesen, ist jedoch mit einigen Nachteilen behaftet.

Die Verbindung zwischen Mantelrohr und den Blechhalterungen erfolgt aus Festigkeitsgründen zumeist durch einen Schweißvorgang, was sehr häufig zu inneren Spannungszuständen der Gehäusebaueinheit führt und unter Umständen, insbesondere in bezug auf eine einwandfreie Lagerung der Lenkwelle, kostenintensive Nacharbeiten notwendig macht, die sich aufgrund von Schweißverzügen an den betreffenden Bauteilen ergeben.

Darüber hinaus ist beim herkömmlichen Aufbau die Tatsache als nachteilig anzusehen, daß sich durch das außen an den Mantelrohrhalterungen angeordnete Lamellenpaket eine Aufsummierung sämtlicher innerhalb des Mantelrohres, der Halterungen sowie der einzelnen Blechstreifen und Distanzstücke des Lamellenpaketes vorhandenen Abmaßtoleranzen ergibt. Aus diesem Grunde muß der Lenksäulenrahmen zur Kompensation der auftretenden Toleranzen oft zweiteilig ausgeführt werden, was neben Kostennachteilen auch Beeinträchtigungen in bezug auf die Steifigkeit der Gesamtbaugruppe mit sich bringt.

Aufgabe der vorliegenden Erfindung ist es daher, eine Lenksäulenbaueinheit der gattungsgemäßen Art so weiterzuentwickeln, daß deren konstruktiver Aufbau vereinfacht, der Montage- und Herstellungsaufwand verringert, sowie die Funktionalität der Gesamteinheit verbessert wird.

Diese Aufgabe wird erfindungsgemäß dadurch gelöst, daß das Lenkwellengehäuse aus einem mit Längsdurchbrüchen versehenen einstückigen Bauteil besteht und daß in mindestens einem der Durchbrüche des Lenkwellengehäuses mindestens ein Lamellenpaket angeordnet ist.

Durch diesen erfindungsgemäßen konstruktiven Aufbau kann das bislang notwendige Mantelrohr um die Lenkwelle vollständig entfallen. Durch die neuartige Gestaltung des Lenkwellengehäuses sind keinerlei Schweißarbeiten mehr notwendig, um für die zur Befestigung der Lenksäulenbaueinheit notwendigen Lamellenpakete einen geeigneten Anbauort zu schaffen. Somit entfällt die Ursache für früher oft notwendige Nacharbeiten. Darüber hinaus wird durch die Anordnung der Lamellenpakete innerhalb eines Durchbruches des Lenksäulengehäuses jegliche negative Einflußnahme evtl. auftretender Fertigungstoleranzen der Lamellenpakete vermieden. Aus dem erfindungsgemäßen Aufbau resultiert ein einteiliges, steifes Lenksäulengehäuse ohne jegliche Montageverspannungen.

Weitere spezielle Ausgestaltungen des Gegenstandes der Erfindung ergeben sich aus den Merkmalen der Unteransprüche.

Zweckmäßigerweise wird das einteilige Lenksäulengehäuse mit den für die Lamellenpakete notwendigen Durchbrüchen als Aluminiumstrangpreßprofil hergestellt. Eine derartige Herstellungsweise garantiert eine größtmögliche Genauigkeit der Abmaße sowie eine kostengünstige Herstellung, darüber hinaus ist das Material unter Recyclinggesichtspunkten als besonders vorteilhaft anzusehen. Zwischen den Durchbrüchen für die Lamellenpakete ist entsprechend einer vorteilhaften Ausgestaltung des Gegenstandes der Erfindung eine Durchgangsbohrung zur Aufnahme der Lenkwelle angeordnet, wobei die Lenkwelle in dieser Bohrung durch zwei direkt eingepreßte Lagerungen gehalten ist. Durch die hohe Fertigungsgenauigkeit üblicher Aluminiumstrangpreßprofile läßt sich durch diesen konstruktiven Aufbau problemlos eine spielfreie leichtgängige Lagerung der Lenkwelle erreichen.

Im Folgenden wird ein Ausführungsbeispiel des Gegenstandes der Erfindung anhand der Figuren näher erläutert.
Es zeigen:
- Figur 1:: eine erfindungsgemäße Lenksäulenbaueinheit
- Figur 2:: einen Zusammenbau einer möglichen Ausführung einer Lenksäule mit der erfindungsgemäßen Lenksäulenbaueinheit.

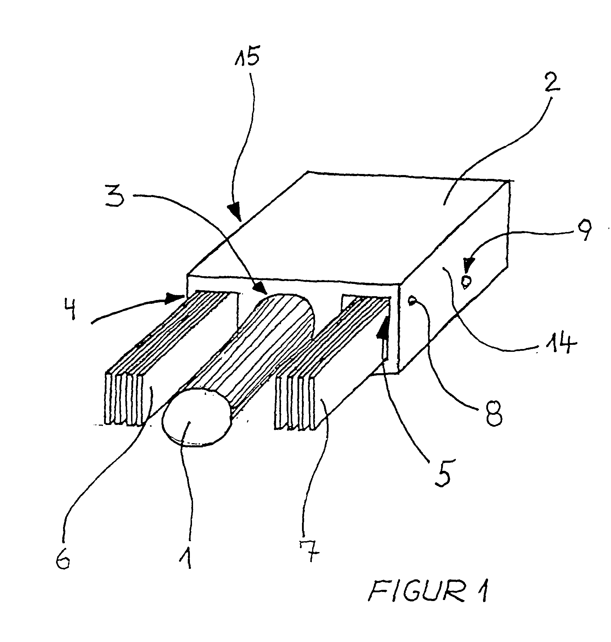

In der beigefügten Figur 1 wurden aus Gründen der Übersichtlichkeit nur die für die Erfindung wesentlichen Bauteile dargestellt.

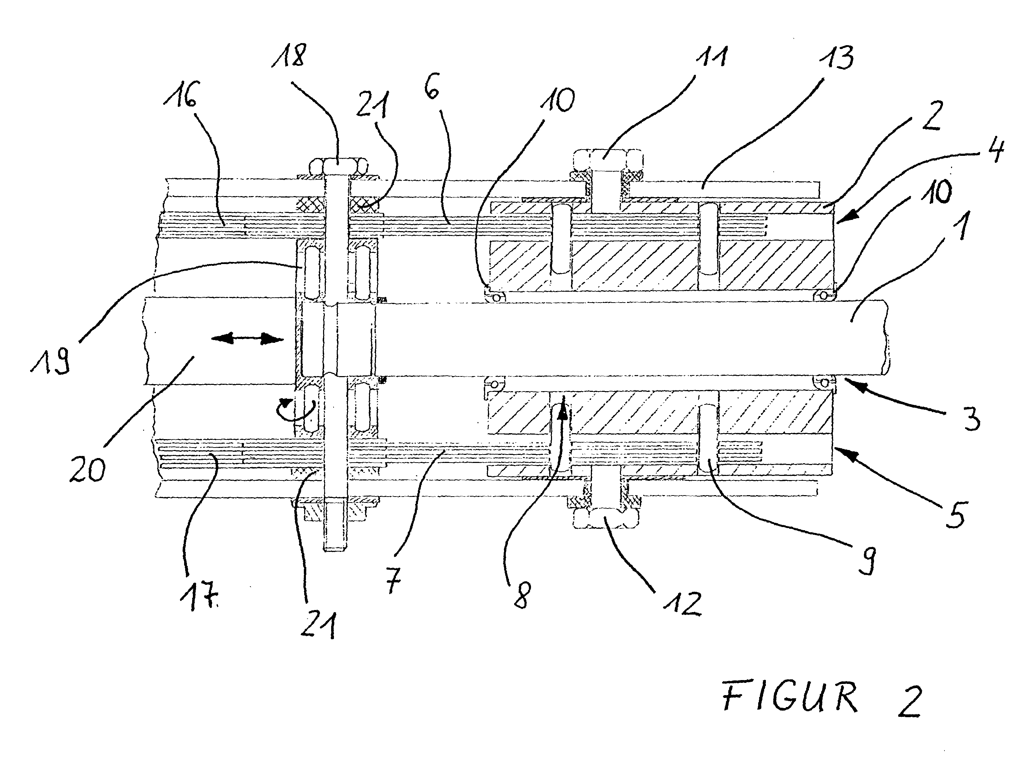

In der Figur 2 ist zum besseren Verständnis der Wirkungsweise, eine spezielle Ausführung einer Lenksäule mit einer erfindungsgemäßen Lenksäulenbaueinheit als Zusammenbau und im Schnitt gezeigt.

Die Figur 1 zeigt einen Teil der Kraftfahrzeuglenksäule mit der Lenkwelle 1, die in einem Lenksäulengehäuse 2 mit Hilfe hier nicht dargestellter üblicher Rillenkugellager gelagert ist. Das Lenksäulengehäuse 2'besitzt eine im wesentlichen quaderförmige Gestalt und ist als Abschnitt eines Aluminiumstrangpreßprofils hergestellt. Dieses Strangpreßprofil besitzt neben der mittigen Bohrung 3, in der die Lenkwelle gelagert ist, zwei seitlich angeordnete Durchbrüche 4 und 5, die einen im wesentlichen rechteckförmigen Querschnitt aufweisen. In diese Durchbrüche ist je ein Lamellenpaket 6 und 7 eingeschoben und mit Hilfe von Zylinderstiften befestigt. Diese Zylinderstifte durchqueren Durchgangsbohrungen 8, die in den äußeren Seitenwänden 14 bzw. 15 des Strangpreßprofiles angeordnet sind.

Natürlich ist neben der hier exemplarisch dargestellten Quaderform des Lenksäulengehäuses 2 auch eine andere Querschnittsgestaltung denkbar, die sich aus einbauseitigen Notwendigkeiten ergeben kann.

Durch die erfindungsgemäße Anordnung der Lamellenpakete 6 und 7 spielen evtl. auftretende Maßtoleranzen dieser Pakete für die Außenabmessungen des Lenksäulengehäuses 2 keine Rolle. Eine derartige Gestaltung der Lenksäulenbaueinheit mit einem einstückigen Lenkwellengehäuse ohne Mantelrohr läßt sich sowohl im Personenkraftwagenbau wie auch bei der Gestaltung von Lastkraftwagen mit den zuvor erwähnten Vorteilen einsetzen.

Die Figur 2 zeigt einen verglichen mit der Figur 1 größeren Ausschnitt einer möglichen Ausführung einer Kraftfahrzeuglenksäule mit der Lenkwelle 1, die in dem Lenksäulengehäuse 2 mit Hilfe üblicher Rillenkugellager 10 gelagert ist. Das Lenksäulengehäuse 2 besitzt neben der mittigen Bohrung 3, in der die Lenkwelle gelagert ist, zwei seitlich angeordnete Durchbrüche 4 und 5, in die je ein Lamellenpaket 6 und 7 eingeschoben und mit Hilfe von Zylinderstiften 9 befestigt ist. Diese Zylinderstifte durchqueren Durchgangsbohrungen 8, die in die äußeren Seitenwände des Lenksäulengehäuses eingebracht sind.

Das Lenksäulengehäuse 2 ist bei der in Figur 2 gezeigten Ausführung einer Lenksäule über Befestigungsschrauben 11 und 12 in dem karosseriefesten Halter 13 festgelegt. Zur Schwingungsisolierung können die Befestigungsschrauben zusätzlich elastomere Distanzhülsen 23 aufweisen. Die in das Lenksäulengehäuse 2 eingeschobenen und über die Zylinderstifte 9 darin befestigten Lamellenpakete 6 und 7 treten einseitig aus dem Lenksäulengehäuse aus. In der Darstellung der Figur 2 ist dies die linke Bildhälfte. Auf dieser Austrittsseite steht jedes der Lamellenpaketbleche mit Lamellenpaketblechen je eines weiteren Lamellenpaketes 16 beziehungsweise 17 in Wirkverbindung. Um eine Klemmwirkung dieses Klemmechanismus zu erzielen, durchsetzt ein Bolzen 18 den Halter 13 sowie die Lamellenpakete 6, 7, 16 und 17. Zwischen den Lamellenpaketen wird eine an sich bekannte Hubmechanik 19 mit doppelseitig eingesetzten Stiften verwendet, die bei dem Ausführungsbeispiel aus zwei axial hintereinander angeordneten Stiftmechanismen mit entgegengesetzter Drehrichtung besteht. Diese Hubmechanik wird über einen Riemen 20 betätigt. Dieser Riemen ist in der Figur 2 geschnitten dargestellt, sodaß nur der Teil des Riemens 20 erkennbar ist, der unterhalb der Hubmechanik 19 verläuft.
Zur Absorbtion von Körperschall können zwischen den Lamellenpaketen und dem Halter 13 Dämpfungselemente 21 eingesetzt werden, die auch gleichzeitig einen gleichmäßigen Abstand zwischen diesen Bauteilen gewährleisten. Zur Abnutzungskompensierung können darüber hinaus Verschleißscheiben 22 eingesetzt werden.
Um eine Verstellmöglichkeit der Lenksäule zu ermöglichen, werden in an sich bekannter Weise Langlöcher in dem Halter beziehungsweise in den Lamellenpaketen vorgesehen.

### Bezugszeichenliste:

- 1: Kraftfahrzeuglenkwelle
- 2: Lenksäulengehäuse
- 3: Durchgangsbohrung
- 4: Durchbruch
- 5: Durchbruch
- 6: Lamellenpaket
- 7: Lamellenpaket
- 8: Durchgangsbohrungen
- 9: Zylinderstift
- 10: Kugellager
- 11: Befestigungsschraube
- 12: Befestigungsschraube
- 13: Halter
- 14: Seitenwand
- 15: Seitenwand
- 16: Lamellenpaket
- 17: Lamellenpaket
- 18: Bolzen
- 19: Hubmechanik
- 20: Riemen
- 21: Dämpfungselement
- 22: Verschleißscheibe
- 23: Distanzhülse

## Patentansprüche

1. Lenksäulenbaueinheit einer verstellbaren Kraftfahrzeuglenksäule mit einer Lenkwelle, einem die Lenkwelle aufnehmenden Lenksäulengehäuse und einer Befestigungsvorrichtung für die lösbare Festlegung des Lenksäulengehäuses an einem karosseriefesten Halter, wobei die Befestigungsvorrichtung mindestens ein am Lenksäulengehäuse festgelegtes Lamellenpaket aufweist,
**dadurch gekennzeichnet, daß**
das Lenksäulengehäuse (2) aus einem mit Längsdurchbrüchen (4, 5) versehenen einstückigen Bauteil besteht und daß das Lamellenpaket (6, 7) in mindestens einem Durchbruch (4, 5) des Lenksäulengehäuses (2) angeordnet ist.

2. Lenksäulenbaueinheit nach Anspruch 1,
**dadurch gekennzeichnet, daß**
das Lenksäulengehäuse (2) aus einem stranggepreßten Aluminiumprofil hergestellt ist.

3. Lenksäulenbaueinheit nach Anspruch 1 oder 2,
**dadurch gekennzeichnet, daß**
das Lamellenpaket (6, 7) am Lenksäulengehäuse (2) durch Zylinderstifte (9) gehalten ist.

4. Lenksäulenbaueinheit nach einem der Ansprüche 1 bis 3,
**dadurch gekennzeichnet, daß**
das Lenksäulengehäuse (2) eine mittige Durchgangsbohrung (3) zur Aufnahme der Lenkwelle (1) aufweist und daß die Lenkwelle (1) in dieser Bohrung (3) durch mindestens zwei, direkt eingepreßte Lagerungen gehalten ist.

## Claims

1. Steering column unit of an adjustable motor vehicle steering column with a steering shaft, a steering column housing holding the steering shaft and a fastening device for detachably fixing the steering column housing to a bracket which is rigid with the body, wherein the fastening device comprises at least one stack of laminations which is fixed to the steering column housing,
**characterised in that**
the steering column housing (2) consists of a one-piece component which is provided with longitudinal apertures (4, 5), and that the stack of laminations (6, 7) is disposed in at least one aperture (4, 5) of the steering column housing (2).

2. Steering column unit according to Claim 1,
**characterised in that**
the steering column housing (2) is made of an extruded aluminium section.

3. Steering column unit according to Claim 1 or 2,
**characterised in that**
the stack of laminations (6, 7) is retained at the steering column housing (2) by cylindrical pins (9).

4. Steering column unit according to any one of Claims 1 to 3,
**characterised in that**
the steering column housing (2) comprises a central through-bore (3) for holding the steering shaft (1), and that the steering shaft (1) is retained in this bore (3) by at least two mountings, which are directly pressed in.

## Revendications

1. Unité structurelle de colonne de direction réglable pour véhicule automobile, comprenant un arbre de direction, un boîtier de colonne de direction recevant l'arbre de direction et un dispositif de fixation servant à fixer d'une manière séparable le boîtier de colonne de direction sur un support fixe vis-à-vis de la carrosserie, le dispositif de fixation comprenant au moins un empilement de lames fixé au boîtier de colonne de direction,
**caractérisée en ce que**
le boîtier de colonne de direction (2) est constitué d'une pièce d'un seul bloc pourvue de passages longitudinaux (4, 5) et que l'empilement de lames (6, 7) est disposé dans au moins un passage (4, 5) du boîtier de colonne de direction (2).

2. Unité structurelle de colonne de direction suivant la revendication 1, **caractérisée en ce que** le boîtier de colonne de direction (2) est réalisé à partir d'un profilé d'aluminium extrudé.

3. Unité structurelle de colonne de direction suivant la revendication 1 ou 2, **caractérisée en ce que** l'empilement de lames (6, 7) est maintenu sur le boîtier de colonne de direction (2) au moyen de broches cylindriques (9).

4. Unité structurelle de colonne de direction suivant l'une des revendications 1 à 3, **caractérisée en ce que** le boîtier de colonne de direction (2) comporte un alésage traversant (3) central servant à recevoir l'arbre de direction (1) et **en ce que** l'arbre de direction (1) est maintenu dans cet alésage (3) au moyen d'au moins deux montages à palier emboîtés à force.
